# EUROPEAN PATENT APPLICATION

(11) **EP 1 107 356 A2**
(43) Date of publication of application: **13.06.2001**
(21) Application number: 00403432.8
(22) Date of filing: 07.12.2000
(51) Int. Cl.: H01Q 3/08, H01Q 1/12

(54) **Device for wireless reception of radio signals**

(30) Priority: 10.12.1999 DE 19959715
(71) Applicant: DEUTSCHE THOMSON-BRANDT GMBH, 78048 Villingen-Schwenningen (DE)
(72) Inventor: Hütter, Ingo, 92648 Boulogne, Cedex (FR); Klank, Otto, 92648 Boulogne, Cedex (FR)
(74) Representative: Kohrs, Martin

(57) **Abstract**

The invention relates to a device for wireless reception of radio signals such as those which are transmitted, for example, in networks which are not based on wires ("wireless network"). A problem which frequently occurs in these networks is that the field strength distribution in a room is highly inhomogeneous due to reflections on walls, ceilings and objects. This can lead to the signal to be received being very severely attenuated at the location of the receiving antenna while, at a point only a few centimetres away, it can be received virtually without any attenuation. The invention thus provides a signal evaluation circuit which continually evaluates the reception field strength. As soon as the reception field strength falls below a specific threshold value, a drive unit reacts by changing the physical position of the antenna.

## Description

The invention relates to a device for wireless reception of radio signals, in particular a device which is linked to a wireless network. The invention is based on a device which is equipped with an antenna for receiving the radio signals from the network, with the antenna signal being emitted to a tuner, and finally being fed to a signal evaluation circuit. The signal evaluation circuit determines, inter alia, the reception field strength.

A problem which frequently occurs when setting up networks which are not based on wires ("wireless network") is that the field strength distribution in a room is highly inhomogeneous due to reflections on walls, ceilings and objects. This can lead to the signal to be received being very severely attenuated at the location of the receiving antenna while, at a point only a few centimetres away, it can be received virtually without any attenuation. Such networks may be used, for example, for networking of consumer electronics devices.

It is known from the prior art for this problem to be solved by using two antennas, which are at a specific distance from one another, rather than the single antenna. In this case, the signal having the greater field strength, or the sum signal from both antennas, is evaluated. Nevertheless, it is possible for both antennas to be located at points at which the field strength is too low at a specific time. For example, it is possible to switch from a first antenna, which is currently receiving a signal that is still acceptable, to the second antenna, whose wanted signal is even poorer. For this reason, switching from one antenna to the other can take place only when appropriate aids have already determined that reception with the other antenna is better. It is thus impossible to switch antennas during regular reception operation, even if this would be desirable due to rapid changes in the reception field strength which are caused, for example, by people moving in the room.

Against this background, the object of the invention is to provide a device whose reception quality is better than that from the prior art. This object is achieved by a device according to Claim 1.

The drive unit can expediently be provided with guidance means which allow the antenna to move in a plane. In design terms, it is particularly simple for the guidance means to be in the form of a rotating table, for example a circular ring. The circular ring can be provided on its outer circumferential face with a tooth system in which a drive pinion of a drive motor engages.

In another exemplary embodiment of the invention, the guidance means may be in the form of guide rails which can move in the translational direction. It is particularly expedient for the translation directions of the guide rails to be oriented at right angles to one another. Using such a device it is possible for the antenna to carry out any desired movements within the movement range of the guide rails. It is particularly expedient for the guide rails to be driven via a spindle drive.

In order to ensure that even continued movement of the antenna in a single rotation direction cannot lead to the antenna cable being screwed off, it may be advantageous to transmit the antenna signal, by means of a transmitter, from the moving antenna to a fixed position circuit part.

A further object of the invention is to specify a method in order to readjust a moving antenna to a position where the reception field strength is greater. This object is achieved by a method according to Claim 10.

The drawing shows an exemplary embodiment of the invention, in which:
- Figure 1: shows the field strength distribution in a room,
- Figure 2: shows the arrangement of a moving antenna in a device.
- Figures 3a and 3b: show an exemplary embodiment of a moving antenna, viewed from above and from the side,
- Figures 4a and 4b: show a further exemplary embodiment of a moving antenna, viewed from above and from the side, and
- Figure 5: shows a block diagram of a circuit which evaluates the reception field strength and controls the movement of the antenna.

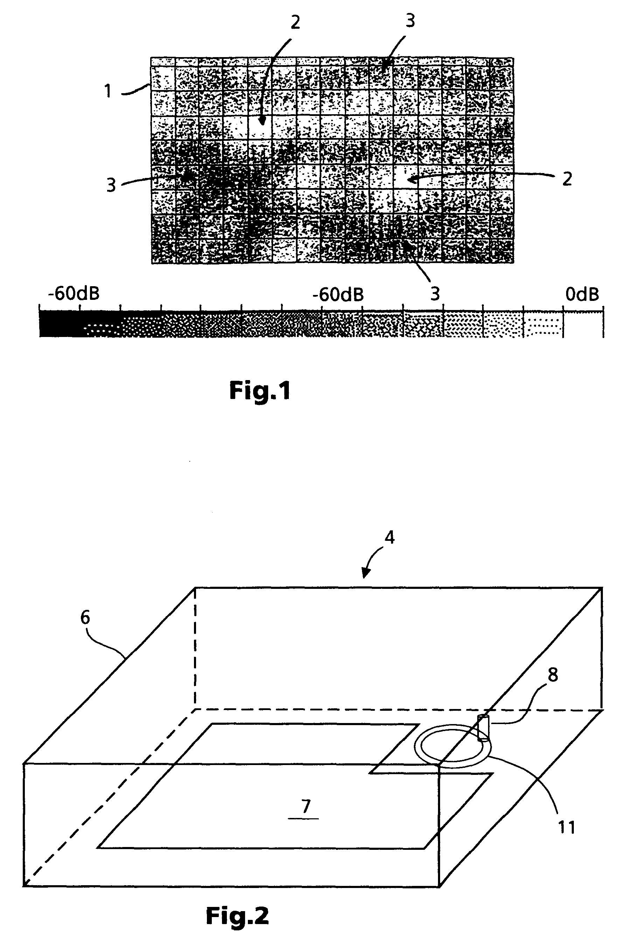

The illustration shown in Figure 1 shows the results of field strength measurements in an area with a size of 25 x 50 cm in a room, that is to say the grid shown in Figure 1 has a grid size of approximately 3 cm. Bright areas, which are denoted by the reference symbol 2 in Figure 1, indicate regions where the field strength is high, while dark areas, which are denoted by the reference symbol 3, indicate regions where the field strength is low. The relationship between the attenuation of the signal and the individual grey levels can be see from the bar in the lower part of Figure 1. Figure 1 clearly shows that there are areas in which the signal can be received with virtually no attenuation, while the signal is severely attenuated in other areas. In this case, the areas where the attenuation is severe form contiguous strips, which include areas where the attenuation is low. The measurements were carried out in the 2.4 Gigahertz frequency band, that is to say the intervals between these observed strips correspond approximately to the actual wavelength of the signal. This figure shows that it is possible, when using a device which is equipped with two switchable antennas, for both antennas to be in an area where signals can be received only weakly. On the other hand, the figure clearly shows that there is a high probability of a region with a high reception field strength being located in the immediate vicinity of a region with only a low reception field strength. The invention makes use of this fact.

Figure 2 illustrates, schematically, a device according to the invention which is denoted, overall, by the reference symbol 4. The device 4 is surrounded by a housing 6 which accommodates a main board 7. A moving antenna 8 is also arranged, on a moving base, in the housing 6. In this case, the adjustment movement of the antenna does not need to be greater than approximately one wavelength of the radio signal, that is to say, in networks which operate in the gigahertz band, it is sufficient for the adjustment movement to be approximately a few centimetres. As can also be seen in Figure 1, it is, however, not sufficient for the antenna to be movable only in a translational direction, since a situation could arise in which the translation movement accidentally runs along a strip where the reception field strength is low. In consequence, it must be possible for the antenna to move in at least two different directions since any given movement may be composed of two translation movements whose movement directions are oriented at right angles to one another. According to a first exemplary embodiment of the invention, the antenna is moved along a circular arc.

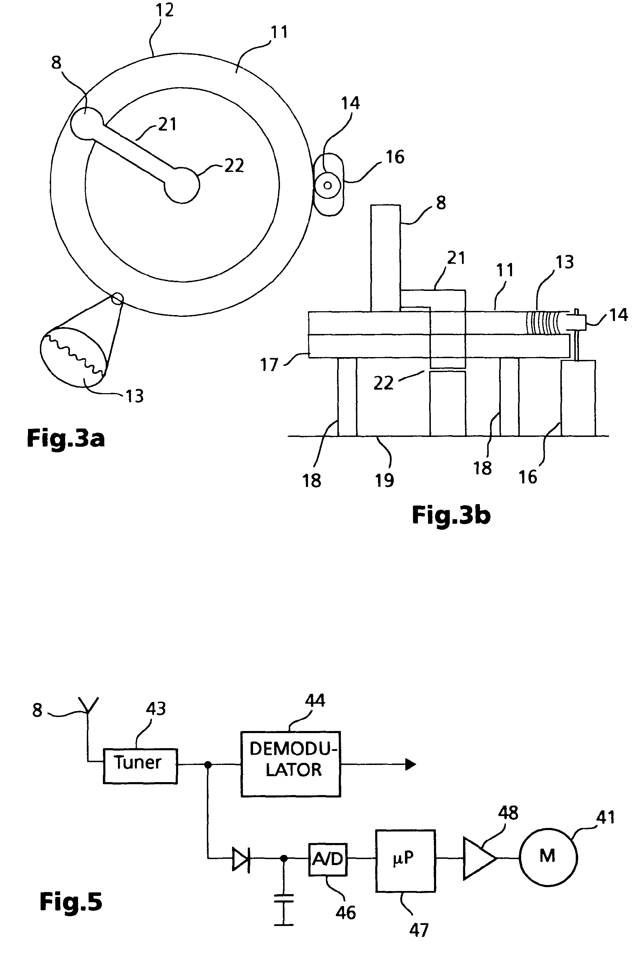

Figure 3a shows a plan view from above of a first exemplary embodiment of a moving antenna 8. The antenna 8 is arranged on an annular rotating table 11 whose outer circumference 12 is toothed. A detail shows an enlargement of the tooth system 13, in which a drive pinion 14 of a motor 16 engages. Figure 3b shows a view of the arrangement from the side. The rotating table 11 is mounted on a bearing 17 such that it can rotate, so that the rotating table 11 can be caused to revolve by the motor 16. The bearing 17 is connected by holders 18 to a baseplate 19 on which the motor 16 is also fitted. The antenna is connected via a waveguide 21 to a transmitter 22, which transmits the received antenna signal without wires from the rotating table 11 to the stationary baseplate 19. This ensures that no cable becomes unscrewed if, due to particular circumstances, the rotating table 11 were to move in only one rotation sense. By way of example, the rotating table 11 may have a diameter of 10 cm to 15 cm.

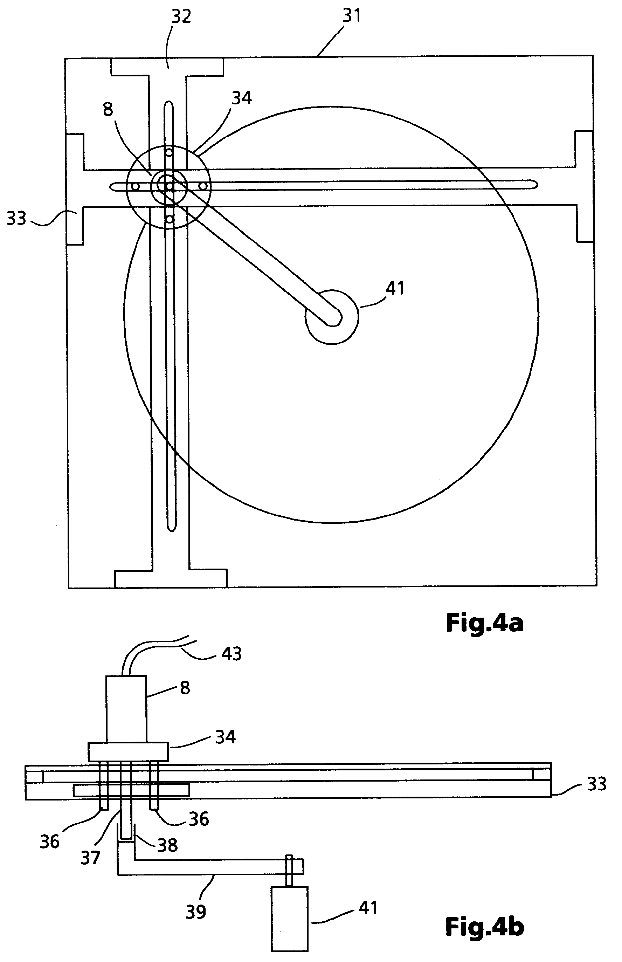

Figure 4a shows a further exemplary embodiment of the invention, viewed from above. Two guide rails 32 and 33, which can move in the translational direction, are arranged in a frame 31. The antenna 8 is mounted on an antenna holder 34, which is mounted by means of four guide pins 36 on the guide rails 32 and 33 such that it can be moved longitudinally in each case. Since the guide rails 32, 33 are arranged in a cruciform pattern, the antenna holder 34 remains fixed at the point where the guide rails cross. A centre pin 37 projects under the guide rails in the centre of the antenna holder 34. The centre pin 37 engages in a receptacle 38 in a pivoting arm 39. The pivoting arm can be pivoted by means of a motor 41. The guide rails 32, 33 are mounted such that they can slide in the frame 31 so that the antenna carries out a rotating movement along the circular path, which is indicated by the line 42, when the pivoting arm 39 pivots. The antenna 8 itself is held on the antenna holder 34 such that it can rotate, and it is thus possible for the antenna to be connected directly by means of an antenna cable 43 without there being any risk of the antenna cable becoming twisted, for example during continued circular movement of the antenna. In the illustrated exemplary embodiment, the antenna cable is expediently routed upwards, so that it cannot be trapped in the guide rails or in the pivoting arm.

In an alternative exemplary embodiment, which is not illustrated in the drawing, the guide rails are provided at at least one end with threaded sleeves in which a threaded spindle, which can rotate, engages. Rotation of the threaded spindles causes the guide rails to move in the translational direction, so that the antenna is in turn moved on the circular path shown in Figure 4a.

In a further exemplary embodiment of the invention, the guide rails are driven by drive elements composed of so-called memory metals, whose length is variable to a considerable extent. The increase in length is controlled, for example, by means of a temperature change, which is caused by a current flow in the memory metal.

However, the way in which the physical position of the antenna is changed is irrelevant to the invention itself. It is also irrelevant whether the movement of the antenna actually follows a circular path. However, for the reasons mentioned initially, it is expedient for the movement not to be a straight line.

Figure 5 shows a block diagram of a circuit which evaluates the reception field strength and controls the movement of the antenna as a function of this. The signal from the antenna 8 is emitted to a tuner 43 and is fed to a demodulator 44, which emits the said signal to a signal processing circuit, which is not shown. The output signal from the tuner is rectified and is converted in an A/D converter 46 to a digital value which describes the present amplitude of the tuner signal. This digital value is evaluated in a microprocessor 47 by means of a specific program, which will be described in the following text. Depending on this signal evaluation, the microprocessor emits control commands to a driver circuit 48, which drives the motor 41 as appropriate.

The invention described so far operates as follows:

When the device is being operated, the antenna is continually moved through short distances away from its present position, which is referred to in the following text as the mid-position. The antenna 8 carries out a small-amplitude oscillation about the mid-position, with the deflection being, for example, ±15°. This oscillatory movement is controlled by the microprocessor 47. The microprocessor 47 evaluates the reception field strength at the end points and in the centre of this oscillatory movement. The respective reception field strengths from these measured values are compared in order to calculate whether the mid-position of the antenna is located at a local minimum, at a maximum or in a transitional region. If, for example, the reception field strength is at its lowest in the centre of the oscillatory movement, the antenna is moved in the direction of the maximum reception field strength. In one exemplary embodiment of the invention, the mid-position of the oscillation is shifted such that it coincides with that inversion point at which the maximum reception field strength was previously measured. In other exemplary embodiments of the invention, the magnitude of the adjustment movement may also be greater or smaller. If the maximum reception field strength occurs at the mid-position, the location of the mid-position is not changed. This process is continually repeated during operation of the device since the areas of high and low reception field strength are generally not static in a room. As soon as the reflection conditions in the room change, as is caused, for example, by people moving, the field strength distribution also changes. The control system described above therefore has to operate sufficiently fast to be able to compensate even for fluctuations of this type.

This method can advantageously be carried out even during reception operation, since there is no need to worry that the reception field strength will suddenly fall to such an extent that it is no longer possible to receive a wanted signal.

Two moving antennas are provided in a further exemplary embodiment of the invention. During operation, that one of the two antennas which has the better reception at a specific time remains static. The other antenna carries out the oscillatory movement described above, until the antenna has reached a local reception field strength maximum, that is to say the location of the mid-position is no longer changed. If the reception field strength of the second antenna becomes greater than that of the first, then the microprocessor switches from the first antenna to the second. This exemplary embodiment ensures that a more uniform reception field strength is available during reception operation.

In a modification of this last-mentioned exemplary embodiment, two antennas are arranged on one rotating table. A first antenna is held such that it can move with respect to the rotating table so that, even when the rotating table is stationary, this antenna can carry out an oscillatory movement, in the form of a circular arc, in the circumferential direction. In contrast to this, the second antenna changes its position only when the rotating table is rotated. The position of the antennas is in this case selected such that the second antenna and the mid-point of the oscillation of the first antenna are in the same radial position.

In this antenna arrangement, the second antenna is always used to receive the wanted signal, while the first antenna is used to determine the reception conditions in the immediate vicinity of the second antenna. If this leads to the result that the reception conditions are better in a different rotation position of the rotating table, the rotating table is readjusted.

This arrangement has the advantage that the reception conditions for the second antenna change only slowly, and that the received signal does not contain any discontinuities resulting from switching between two antennas.

## Claims

1. Device for wireless reception of radio signals having an antenna and a signal evaluation circuit which determines the reception field strength, characterized in that the antenna (8) is designed to be movable, in that a drive unit moves the antenna from rest position during reception operation, and in that, while this is taking place, a signal evaluation circuit evaluates the reception field strength and emits a control signal to the drive unit (14; 41, 39), and the drive unit changes the physical location of the mid-position of the antenna in the sense of increasing the reception field strength.

2. Device according to Claim 1, characterized in that the drive unit comprises guidance means (11; 32, 33) which allow the antenna to move in a plane.

3. Device according to Claim 2, characterized in that the guidance means are in the form of a rotating table (11).

4. Device according to Claim 3, characterized in that the rotating table is in the form of a circular ring.

5. Device according to Claim 4, characterized in that the circular ring is provided on a circumferential face (12) with a tooth system (13) in which a drive pinion (14) of a drive motor (14) engages.

6. Device according to Claim 2, characterized in that the guidance means comprise guide rails (32, 33) which can move in the translational direction.

7. Device according to Claim 6, characterized in that the guidance means are formed from two guide rails whose translation directions are oriented at right angles to one another.

8. Device according to Claim 2, characterized in that a transmitter (22) is connected to the antenna and is suitable for transmitting the antenna signal from the moving guidance means to the stationary part of the device without wires.

9. Device according to Claim 1, characterized in that the said device is equipped with a second moving antenna.

10. Method for readjusting a moving antenna to a position in which the reception field strength is greater, with the method comprising the following steps:
a) the antenna is moved from a mid-position in the form of an oscillation,
b) the reception field strength is measured at the mid-position and at the inversion points of the oscillation,
c) the measured reception field strengths are compared with one another,
d) if the measured reception field strength at one inversion point is greater than at the mid-position, a new mid-position is selected which is closer to the said inversion point than the original mid-position, and
e) if the measured reception field strength at the mid-position is greater than at the inversion points, the location of the mid-position is not changed.
